# EUROPÄISCHE PATENTANMELDUNG

(11) **EP 1 465 094 A1**
(43) Veröffentlichungstag der Anmeldung: **06.10.2004**
(21) Anmeldenummer: 03290820.4
(22) Anmeldetag: 01.04.2003
(51) Int. Cl.: G06F 17/60, G09F 27/00

(54) **Dienstleistungszentrale zum Steuern und Verwalten einer Vielzahl von Anzeigetafeln, sowie derartige Anzeigetafel**

(71) Anmelder: ALCATEL, 75008 Paris (FR)
(72) Erfinder: Lopez Aladros, Rodolfo, 70329 Stuttgart (DE); Banet, Franz Josef, 71665 Vaihingen (DE); Stiegler, Leonhard, 75180 Pforzheim (DE); Schmidt, Peter, 70499 Stuttgart (DE)
(74) Vertreter: Brose, Gerhard

(57) **Zusammenfassung**

Die Erfindung betrifft eine Dienstleistungszentrale zum Steuern und Verwalten einer Vielzahl von Anzeigetafeln (IE1, IE2, ..., IEm), welche erste Eingabemittel zur Entgegennahme von anzeigbaren Inhalten, zweite Eingabemittel zur Entgegennahme von Vorgaben bezüglich der Anzeige anzeigbarer Inhalte, erste Sendemittel zum Senden von Informationssignalen mit Information über die anzeigbaren Inhalte und Koordinationsmittel zur Koordination der Vorgaben bezüglich der Anzeige anzeigbarer Inhalte mit Vorgaben bezüglich der Anzeige anderer anzeigbarer Inhalte aufweist, sowie eine derartige Anzeigetafel.

## Beschreibung

Die Erfindung betrifft eine Dienstleistungszentrale zum Steuern und Verwalten einer Vielzahl von Anzeigetafeln nach dem Oberbegriff des Anspruchs 1 und eine Anzeigetafel zur Anzeige wechselnder Anzeigeinhalte, mit einem elektro-optischen Anzeigemedium nach dem Oberbegriff des Anspruchs 2.

Anzeigetafeln, insbesondere großflächige Anzeigetafeln, sind aus dem heutigen öffentlichen Leben nicht mehr wegzudenken. Sie dienen im wesentlichen einerseits der Werbung und andererseits der Information, insbesondere der Information über Ankunftsund Abfahrts- oder Abflugszeiten öffentlicher Verkehrsmittel.

Schon früher wurde viel öffentlich geworben. Werbeplakate an Litfaßsäulen oder an dafür vorbereiteten Flächen an Straßenbahnen spielten dabei die Rolle der wechselnden Werbeträger; Emailtafeln kam die Rolle langfristiger Werbung für bestimmte Produkte zu. Selbst heute werden rückstandsfrei ablösbare Werbefolien als Wechselwerbung bezeichnet. Weiter sind Werbeträger bekannt, bei denen mechanisch durch Drehen oder Auf- und Abwickeln zwischen einer geringen Zahl von Werbung tragenden Flächen gewechselt wird.

Für die Information im Zusammenhang mit dem öffentlichen Verkehr wurden früher oft Wechselschilder oder gar feste Schilder aus Email verwendet. Häufig wurde durch einfaches manuelles Umdrehen solcher Tafeln zwischen zwei für entgegengerichtete Fahrtrichtung geltenden Informationen gewechselt. Für die Zeitangaben wurden entsprechende Zifferntafeln verwendet. Auch Kreidetafeln spielten eine gewisse Rolle. Auch heute noch werden für diese Fälle häufig mechanisch wechselnde Anordnungen verwendet. Eine weitere heute weitverbreitete Möglichkeit besteht in der Verwendung einfarbiger Matrixdisplay-Anzeigen.

Selbst heute werden nur in Ausnahmefällen Anzeigetafeln für mehr als einen Zweck verwendet. Beispielsweise werden an Abfahrtstafeln in Pausen Angaben allgemeinerer Art über den Betreiber oder zu den Einrichtungen gemacht. Beispiele: "Wir befördern Menschen" oder "Hier herrscht Rauchverbot". Auch an elektronisch betriebenen Werbetafeln werden zwar gelegentlich reine Unterhaltungsspots eingestreut; jedenfalls werden keine völlig andersartigen Informationen verbreitet.

Bekannte Anzeigetafeln sind viel zu unflexibel, um für nahezu beliebige Anwendungsfälle Verwendung finden zu können.

Hier schafft die Erfindung Abhilfe durch eine Dienstleistungszentrale nach der Lehre des Anspruchs 1 und eine Anzeigetafel nach der Lehre des Anspruchs 2.

Die Erfindung basiert darauf, daß zunächst geeignete Einrichtungen geschaffen werden müssen, um einen Dienst anbieten zu können, der Werbung verschiedener Art und Informationen völlig anderer Art auf dieselbe Weise anzeigen zu können.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein System mit einer erfindungsgemäßen Dienstleistungszentrale und erfindungsgemäßen Anzeigetafeln.
- Figur 2: zeigt eine erfindungsgemäße Anzeigetafel.
- Figur 3: zeigt eine Steuereinheit einer erfindungsgemäßen Anzeigetafel.
- Figur 4: zeigt eine erfindungsgemäße Dienstleistungszentrale.

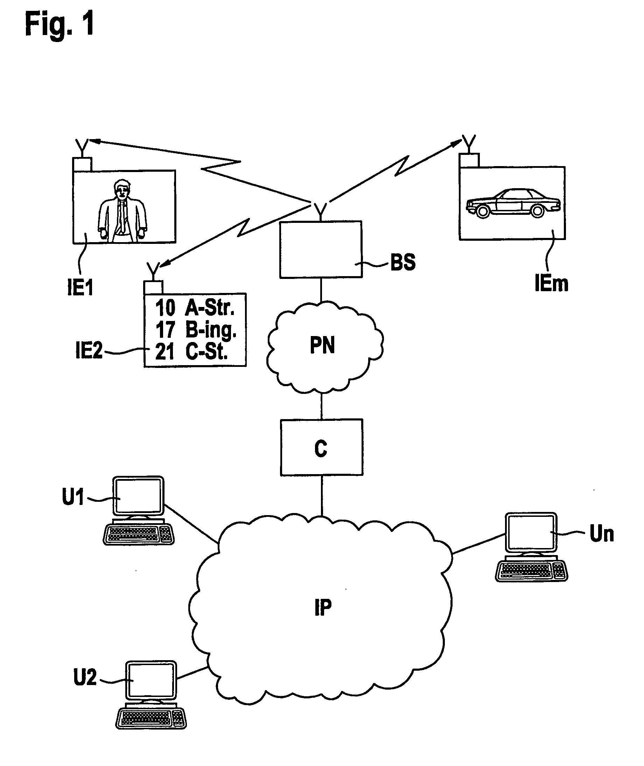

Anhand der Figur 1 wird zunächst das Gesamtsystem und seine Funktion beschrieben.

Das System gemäß Figur 1 weist eine Reihe von Anzeigetafeln auf, von denen die Anzeigetafeln IE1, IE2 und IEm dargestellt sind. Die Anzeigetafeln IE1, IE2, ... , IEm werden per Funk von einer Funkstation BS mit Information versorgt. Die Bezeichnung BS weist darauf hin, daß im Beispiel eine Basisstation eines zellularen Funksystems verwendet wird. Weiter weist das System eine Dienstleistungszentrale C auf, die einerseits über ein Telekommunikationssystem PN mit der Funkstation BS und andererseits über ein Datennetz, hier das Internet IP, mit einer Reihe von Benutzern in Verbindung treten kann. Die Benutzer sind durch die Benutzer U1, U2 und Un repräsentiert.

Ein Benutzer, etwa der Benutzer U2, will nun eine Werbung auf verschiedenen, dem System angehörigen Anzeigetafeln schalten. Grundsätzlich kann er dies natürlich mit herkömmlichen Medien mit einem Operator des Systembetreibers vereinbaren. Bevorzugt stellt er jedoch eine Datenverbindung, im Beispiel über das Internet IP, her. Er gibt dann den von ihm gewünschten, zur Anzeige zu bringenden Informationsinhalt ein. Diese Eingabe kann dadurch erfolgen, daß dieser Inhalt in direkter Form, in welchem Format auch immer, übertragen wird. Sie kann aber durch Verweis auf einen bereits bekannten oder auf einen an anderer Stelle des Internets vorliegenden Informationsinhalt erfolgen.

Weiter wird der Benutzer, vorzugsweise auf demselben Wege, noch eingeben, unter welchen Bedingungen er diese Werbung schalten möchte. Möglicherweise wird er sich mit einem Operator in der Zentrale absprechen, wann, wie lange und wo der betreffende Informationsinhalt zur Anzeige gebracht werden soll und zu welchen Bedingungen dies erfolgen kann. Je konkreter die Wünsche sind, desto größer ist die Wahrscheinlichkeit, daß sie mit Wünschen anderer Benutzer kollidieren. Dann muß auf Alternativen übergegangen werden. Im Falle der Absprache mit dem Operator muß dieser dann die Wünsche an der Zentrale eingeben.

Im Prinzip und vorteilhafterweise kann aber die Arbeit des 0-perators fallweise an den Benutzer übergeben werden. Dann kann beispielsweise der Benutzer ein Internetformular ausfüllen und dieses zusammen mit dem gewünschten Informationsinhalt an die Zentrale senden. Durch einen auf der Seite der Zentrale automatischen Dialog kann im Falle von Kollisionen eine Alternative gewünscht werden. Ein solcher automatisierter Dialog kann auch Vorschläge seitens des Systems oder die Bereitstellung einer Aufstellung mit noch freien Möglichkeiten (Ort und Zeit) beinhalten. In der Praxis wird auch der Operator den Weg über das Internet nehmen.

Die Bedingungen, unter denen ein bestimmter Informationsinhalt dann an mindestens einer der Anzeigetafeln IE1, IE2, ..., IEm zur Anzeige gebracht werden soll, werden anschließend als Steuerinformation aufbereitet.

Erfindungsgemäß ist nun vorgesehen, den Informationsinhalt und die zugehörige Steuerinformation an mindestens eine der Anzeigetafeln IE1, IE2, ..., IEm zu senden und dort weiter verarbeiten zu lassen. Bei mehreren betroffenen Anzeigetafeln kann natürlich die Steuerinformation verschieden sein.

Die Zentrale C sendet nun diese Informationen über die bestehende Telekommunikationsinfrastruktur an die betroffenen Anzeigetafeln. Die jeweilige Nachricht (Informationsinhalt oder Steuerinformation) geht dann über das Telekommunikationsnetz PN an eine Funkstation BS, die sich in der Nähe der betroffenen Anzeigetafel befindet. Von dort wird die Nachricht an die Anzeigetafel übermittelt. Die Informationsinhalte können gemeinsam mit oder getrennt von den Steuerinformationen übersandt werden. Beispielsweise kann der erforderliche Informationsinhalt an einer betroffenen Anzeigetafel bereits vorliegen, während neue Steuerinhalte übersandt werden müssen.

Als Übertragungsmedium zwischen der Funkstation und der Anzeigetafel kommt insbesondere eine Funkstrecke eines zellularen Mobilfunksystems, etwa GSM oder UMTS, in Frage. Auch lokale Funknetze, als WLAN (Wireless Local Area Network) bekannt, kommen infrage. Weitere derzeit bekannte oder angedachte Übertragungsmedien sind unter den Bezeichnungen CDMA, CDMA 2000, AMPS-41, PDC, Bluetooth, DECT oder HomeRF bekannt. Jede andere Technologie ist aber ebenfalls geeignet. Voraussetzung ist letztlich nur die individuelle Adressierung und die ausreichende Kapazität.

Es ist nicht absolut zwingend, daß ein zur Anzeige vorgegebener Zeitpunkt mit vorgegeben wird. In diesem Fall würde eben immer dann eine Anzeige geschaltet werden, wenn der zugehörige Informationsinhalt gerade ankommt. Das System kann aber viel flexibler betrieben werden, wenn auch über die Zeitpunkte oder Zeiträume der Anzeigen Vorgaben gemacht werden können. Für Fahrplanangaben kann sinnvoll sein, diese immer einen bestimmten Zeitraum vor dem Eintreffen des nächsten Verkehrsmittels einzublenden. Werbespots werden heute oft in Blöcken zur Anzeige gebracht, wobei ein Werbespot mit einem bestimmten Abstand mehrfach zur Anzeige gebracht wird.

Je flexibler die Einrichtung arbeitet und je mehr auch lokale Auslöser eine Rolle spielen, desto schwieriger ist der tatsächliche Ablauf zum Zweck der Abrechnung nachzuhalten. Hier kann es sinnvoll sein, vor Ort die für die Abrechnung erforderlichen Daten zu erfassen und auf geeignete Weise zurück zu melden. Die hier vorgesehenen Übertragungsmedien sind in der Regel ohnehin bidirektional.

Auch für andere Zwecke, etwa für Meinungsumfragen, kann eine Rückmeldung sinnvoll sein. Häufig sind Anzeigetafeln so ausgestaltet, daß sie zwar einerseits für Vorübergehende Information allgemeiner Art, etwa einen Lageplan, anzeigen, andererseits aber auch durch Einzelne zu Auskunftszwecken individuell verwendbar sind. Auch solche Anzeigetafeln können erfindungsgemäß ausgestaltet sein und in dem hier beschriebenen System verwendet werden. Hier spielen die Übertragungswege in der Gegenrichtung, also zur Zentrale hin, eine wichtige Rolle. Selbstverständlich muß die Zentrale in der Lage sein, eine solche Benutzung zu unterstützen.

Die Informationsinhalte und die zugehörigen Steuerinformationen können aber auch auf andere Weise übertragen werden. Beispielsweise kann dies an jede einzelne Anzeigetafel etwa nach Art einer SMS im Mobilfunk erfolgen (SMS = Short Message Service). Damit kann auch der Polizei oder Feuerwehr die zusätzliche Möglichkeit gegeben werden, kurze Anzeigeinhalte ("Stau", "Bitte Station räumen!", "Tunnel gesperrt!") auf einfache Weise vorübergehend an die Stelle der bisherigen Informationsinhalte einer bestimmten Anzeigetafel zu platzieren.

Auf dieselbe Weise, aber auch über die Zentrale C, können beispielsweise Kunden eines naheliegenden Geschäftes gezielt angesprochen werden. Technische Möglichkeiten, um Einzelne lokalisieren zu können, sind ausreichend bekannt.

Weiter erfolgt über die Zentrale auch die Abrechnung mit den Benutzern. Auch etwaige Filter, die bestimmte Inhalte nicht zulassen, sind vorteilhafter Weise and dieser Stelle vorzusehen. Das Benutzerverhalten einerseits und die Tarifstrategie des Betreibers andererseits können zwar durch entsprechende vorab einzugebende Regeln bestimmt werden, dies betrifft aber dann vorwiegend die kommerzielle Seite der Erfindung. Auch weitere Nutzungsmöglichkeiten gehören der kommerziellen Seite an, die hier nicht von Bedeutung ist.

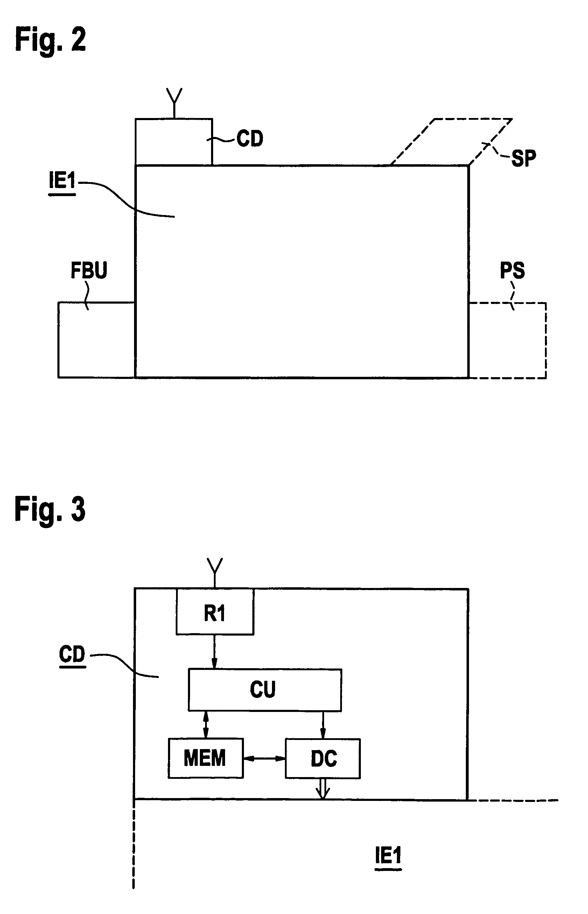

Anhand der Figur 2 wird kurz der Gesamtaufbau einer erfindungsgemäßen Anzeigetafel, hier der Anzeigetafel IE1, dargestellt. Außer der hier nicht näher bezeichneten Anzeigefläche weist diese Anzeigetafel eine Steuereinheit CD auf, die hier wegen des Funkempfangs am oberen Rand der Anzeigetafel dargestellt ist. Für die erforderliche Stromversorgung ist, ebenfalls am oberen Rand, ein Solarpaneel SP oder, alternativ dazu, eine Netzstromversorgung PS vorgesehen. Beide sind gestrichelt dargestellt. Weiter sind Rückmeldemittel FBU dargestellt. Diese optionalen Rückmeldemittel sind bereits oben beschrieben.

Als Anzeigefläche selbst kommt bevorzugt eine elektro-optische Polymerfolie zur Ausführung. Derartige Folien sind zwar derzeit nur in kleineren Einheiten verfügbar, sind aber auch in dieser Größe durchaus nutzbar. Sobald sie in größeren Ausführungen zur Verfügung stehen, werden sie auch als elektronische Litfaßsäule oder auch für LKW-Aufbauten, selbst für LKW-Planen, Verwendung finden können. Andere Technologien sind aber keineswegs ausgeschlossen; für sofortige großformatige Anwendungen kämen etwa moderne LED-Anzeigen in Frage.

Anhand der Figur 3 wird die Steuereinheit CD der Anzeigetafel IE1 näher beschrieben. Die Steuereinheit CD weist einen Empfänger R1, eine Zentraleinheit CU, einen Speicher MEM und eine Anzeigesteuerung DC auf.

Der Empfänger R1 nimmt über eine nicht näher bezeichnete Antenne die von der Zentrale C, hier über das Telekommunikationsnetz PN und die Funkstation BS kommenden Nachrichten auf und gibt sie weiter an die Zentraleinheit CU. Die vom Empfänger R1 empfangenen Nachrichten können sowohl die Informationsinhalte als auch Steuerinformationen betreffen. Beide werden an die Zentraleinheit CU weitergegeben. Unter Zuhilfenahme des Speichers MEM bringt die Zentraleinheit CU die Informationsinhalte entsprechend den Steuerinformationen auf der Anzeigetafel IE1 zur Anzeige. Sofern eine sofortige Anzeige gewünscht wird, braucht die Anzeigezeit nicht mit abgespeichert zu werden. Die Anzeigesteuerung paßt in geeigneter, an sich bekannter Weise, die Informationsinhalte an die Anzeigetafel an.

Eine Steuereinheit CD kann unter Umständen auch mehrere räumlich benachbarte Anzeigetafeln steuern, auch mit unterschiedlichen Informationsinhalten.

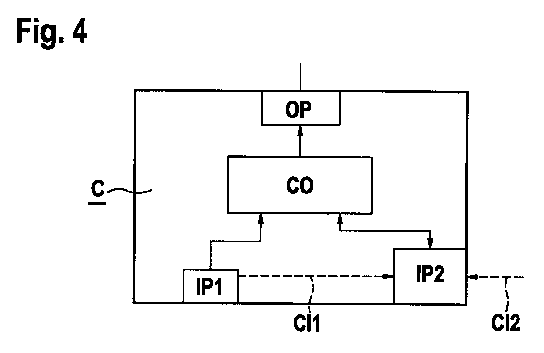

Anhand der Figur 4 wird nun noch beispielhaft der Aufbau einer Dienstleistungszentrale C beschrieben. Dies weist zwei Eingangsschaltungen IP1 und IP2 als erste und zweite Eingabemittel, eine Koordinationsschaltung CO und eine Ausgabeschaltung OP als Sendemittel auf.

Von der ersten Eingangsschaltung IP1 führt ein Weg zur Koordinationsschaltung CO und von dort weiter zur Ausgabeschaltung OP. Der Eingang der ersten Eingangsschaltung IP1 ist vorzugsweise mit dem Internet verbunden. Die zweite Eingangsschaltung IP2 weist alternativ oder sich gegenseitig ergänzend einen Steuereingabeweg CI1 von der ersten Eingangsschaltung und einen zweiten Steuereingabeweg CI2 für einen Operator auf. Von der zweiten Eingangsschaltung IP2 werden die Steuerinformationen ebenfalls zur Koordinationsschaltung CO gegeben. Dort werden gegebenenfalls Kollisionen bemerkt und an die Eingangsschaltung IP2 zurück gemeldet, damit diese Kollisionen aufgelöst werden können. Die Koordinationsschaltung CO ist dann auch dafür verantwortlich, daß die Nachrichten, also die Informationsinhalte und die Steuerinformationen, in der richtigen Weise an die Anzeigetafeln verteilt werden. Wie schon oben erwähnt, kann die Steuerinformation entfallen, wenn die Informationsinhalte immer zum vorgesehenen Anzeigezeitpunkt verteilt werden.

## Patentansprüche

1. Dienstleistungszentrale (C) zum Steuern und Verwalten einer Vielzahl von Anzeigetafeln (IE1, IE2, ..., IEm), **dadurch gekennzeichnet, daß** die Dienstleistungszentrale (C) erste Eingabemittel (IP1) zur Entgegennahme von anzeigbaren Inhalten, zweite Eingabemittel (IP2) zur Entgegennahme von Vorgaben bezüglich der Anzeige anzeigbarer Inhalte, Sendemittel (OP) zum Senden von Informationssignalen mit Information über die anzeigbaren Inhalte und Koordinationsmittel (CO) zur Koordination der Vorgaben bezüglich der Anzeige anzeigbarer Inhalte mit Vorgaben bezüglich der Anzeige anderer anzeigbarer Inhalte aufweist.

2. Anzeigetafel (IE1) zur Anzeige wechselnder Anzeigeinhalte, mit einem elektro-optischen Anzeigemedium, **dadurch gekennzeichnet, daß** die Anzeigetafel weiter Empfangsmittel (CD) zum Empfang von Steuer- und Inhaltssignalen, Speichermittel (MEM) zum Speichern zumindest von anzeigbaren Inhalten, Steuermittel (DC) zur Anzeige eines anzeigbaren Inhalts auf dem Anzeigemedium und eine Stromversorgungseinrichtung (SP, PS) aufweist.

3. Dienstleistungszentrale nach Anspruch 1, **dadurch gekennzeichnet, daß** mindestens eines der Eingabemittel (IP2) Mittel zum Zugriff auf das Internet (IP) als Übertragungsmedium aufweist.

4. Anzeigetafel nach Anspruch 2, **dadurch gekennzeichnet, daß** das Empfangsmittel Mittel zum Zugriff auf GSM, UMTS oder WLAN als Übertragungsmedium aufweist.

5. Anzeigetafel nach Anspruch 2, **dadurch gekennzeichnet, daß** das elektro-optische Anzeigemedium eine elektro-optische Polymerfolie ist.

6. Anzeigetafel nach Anspruch 2, **dadurch gekennzeichnet, daß** sie mit Sensoren und Rückmeldemitteln (FBU) ausgerüstet ist.
